# EUROPEAN PATENT SPECIFICATION

(11) **EP 0 563 195 B1**
(45) Date of publication and mention of the grant of the patent: **13.03.1996**
(21) Application number: 92901844.8
(22) Date of filing: 20.12.1991
(51) Int. Cl.: B29D 30/48, B29D 30/50

(54) **APPARATUS AND METHOD FOR MANUFACTURING A TYRE BEAD CORE ASSEMBLY**
VORRICHTUNG UND VERFAHREN ZUM HERSTELLEN EINES REIFENWULSTKERNAUFBAUS
APPAREIL ET PROCEDE DE FABRICATION D'UN ENSEMBLE TRINGLE DE TALON DE PNEU

(30) Priority: 21.12.1990 NL 9002848
(43) Date of publication of application: 06.10.1993
(73) Proprietor: FRANKE, Robert, NL-7582 Losser (NL)
(72) Inventor: Verschoor, Adri, NL-7582 BL Losser (NL); Franke, Robert, NL-7582 Losser (NL)
(74) Representative: Newby, Martin John
(86) International application number: GB9102298
(87) International publication number: WO9211131

(56) References cited:
- DE-A- 2 360 748
- DE-A- 3 247 441
- US-A- 1 727 090
- US-A- 4 759 813

## Description

### TECHNICAL FIELD

This invention relates to an apparatus for, and a method of, manufacturing an assembly of an annular bead wire core and a surrounding ring of filler material. Such tyre bead core assemblies are used in the manufacture of vehicle tyres, e.g. pneumatic tyres for cars and light trucks. In this specification the term "bead wire" is intended to encompass any suitable high tensile filamentary material, e.g. steel wire, which may comprise a single rubber-coated strand or several rubber-coated strands arranged in a tape.

### BACKGROUND ART

The tyre bead core of a pneumatic tyre is substantially inextensible and ensures that the tyre is retained on a wheel rim. Typically a tyre bead core is produced by winding bead wire, e.g. steel wire, in several layers around a former. When the filamentary material comprises several strands which have previously been brought together and passed through a rubber-coating device to form a "tape" of filamentary material, such "tapes" of filamentary material are wound helically a number of convolutions on to a former to form an annular bead wire core of a desired strength. Prior to wrapping tyre ply material around the bead wire core, a ring of elastomeric filler material is wrapped around the annular bead wire core to produce a tyre bead core assembly.

The manufacture of the annular bead wire core and the fitting of the ring of filler material onto the bead wire core are presently carried out as separate operations resulting in considerable time being taken and extra labour being required.

A known apparatus according to the preamble of claim 1 is disclosed in DE-A-2360748. In this known apparatus, bead wire core material is first wound on a former in a single layer. A flag is then wound over this single layer and further layers of bead wire core material are wound onto the flag. Filler material is then wound onto the flag to one axial side of the ring of bead wire core material. Finally a part of the former is radially expanded to turn or flip the filler material onto the bead wire core material. Thus a number of steps are required to form the finished bead wire core assembly. In addition the former must be able to expand to flip the filler material onto the bead wire core material.

The present invention aims to provide apparatus and a method for the manufacture of an assembly of an annular bead wire core and ring of filler material as a semi-finished component for use in the tyre industry. It is also an aim of the present invention to ensure that, in the semi-finished component, the wound bead wire, i.e. the wound rubber-coated strand or strands which form the tyre bead core, are correctly positioned from the inner to the outer convolutions since, if the strands are placed incorrectly, there is a risk that the semi-finished component could not be further processed on tyre making machines and that air would become trapped within the tyre bead core assembly with disastrous consequences in the characteristics of the finished shaped tyre. A further aim of the invention is to ensure that the ring of filler material is virtually seamless lying in one whole piece circumferentially against the wound rubber-clad strands around the circumference.

### DISCLOSURE OF THE INVENTION

These aims are accomplished in accordance with the invention as defined in the appended independent claims 1 and 13.

Preferably the former is mounted on movable mounting means, the latter being indexable to move the former from a bead wire winding first station to a filler material applying second station and from the second station to a bead assembly unloading third station. Preferably the movable mounting means comprises a turntable.

Typically at least one, and preferably three or four, formers are mounted on the movable mounting means so that different formers are positioned in different stations at each indexed position of the mounting means.

Preferably for the or each former, the or each gripping unit comprises a striker and a movable locking mechanism for clamping the leading end of the bead wire material therebetween so that optimum wrapping or winding of the bead wire material is achieved. Furthermore, it is preferred that the striker is movable, in a direction substantially parallel to the former axis, into and out of a gripping position. This requires care to be taken to ensure that the inner free end of the wound bead wire material is pushed against the inside of the formed bead, thereby obtaining a mainly circular internal area.

Preferably the former segment fitted with the gripping unit is stationary relative to the other segments during the manufacturing procedure, but at other times the segment may be adjustable. In this way an increased dependability for retaining the bead wire material is obtained.

The alignment of the trailing end of the bead wire material is further assured if the first station is equipped with a pressing device to press the bead wire material against the former as it is wound.

A secure retention of the ring of filler material on the formed bead wire core and a seamless transition between the ends of the ring of filler material is obtained by equipping the second unit with pressing means to press the filler material ring onto the annular bead wire core.

The production speed of the apparatus in accordance with the invention can be increased further if, preferably, the or each former includes at least two axially spaced apart annular winding surfaces. It is preferable that winding surfaces define a common cylindrical surface. In this way at least two tyre bead core assemblies can be formed on a former at the same time. Preferably the second station comprises two sub-stations in each of which a ring of filler material is fitted on a different one of the two winding surfaces of a former. In this way the production speed is further increased, in spite of the often relatively large size of the second unit.

An optimum production speed is obtained if, preferably, the bead wire material is supplied in the form of a layer of a number of rubber-coated parallel bead wires or filaments. Then the bead wire core can be formed in a minimum winding time.

It is preferable that the number of bead filaments or strands in the layer is from 2 to 7.

### BRIEF DESCRIPTION OF THE DRAWINGS

Embodiments of the invention will now be described, by way of example with reference to the accompanying drawings, in which:
Fig. 1 is a part sectional view of a tyre fitted on a wheel rim;
Fig. 2 is a detail of Fig. 1 showing a tyre bead core assembly;
Fig. 3 and 8 are schematic representations of apparatus according to the invention for forming tyre bead core assemblies;
Fig. 4 is a view, on an enlarged scale, of detail IV of Fig. 3;
Fig. 5 is a view, on an enlarged scale, of detail V of Fig. 4;
Fig. 6 is a view, on an enlarged scale, of detail VI of Fig. 3; and
Fig. 7 is a view, on an enlarged scale, of detail VII of Fig. 3.

### BEST MODES FOR CARRYING OUT THE INVENTION

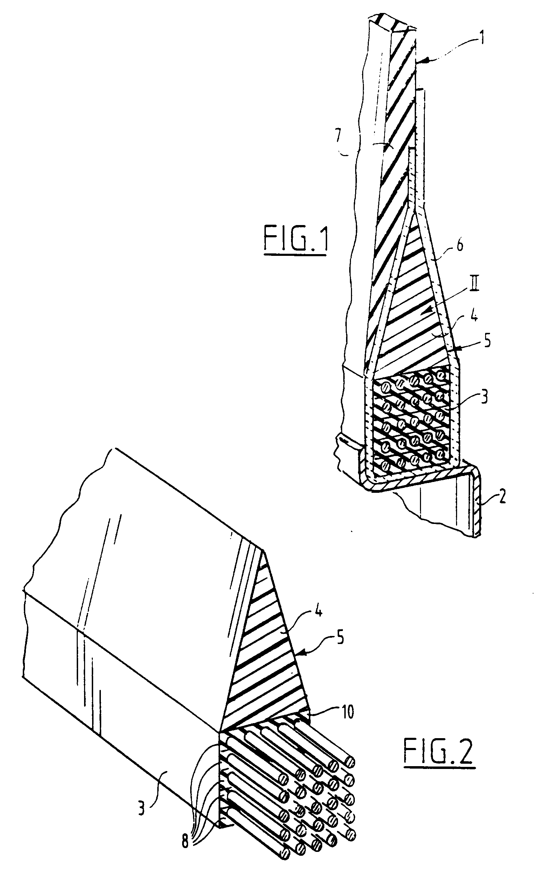

Fig. 1 shows part of a tyre 1 fitted to a wheel rim 2. The tyre 1 comprises an annular tyre bead core 3 having a ring 4 of elastomeric filler material adhered thereto to form a tyre bead core assembly 5. A rayon cloth 6 is wrapped around the assembly 5 and the entire assembly is joined to a side wall 7 of the tyre.

Fig. 2 shows the tyre bead core assembly 5 in more detail. The bead core 3 comprises of five wrapped layers 8, each layer 8 consisting of five parallel strands of high tensile filamentary material, preferably steel wires, which are clad or coated with rubber 10. For the rubber 10 and the rubber of filler ring 4, conventional rubber tyre materials may be used which show a relatively good adhesion during processing in heated conditions.

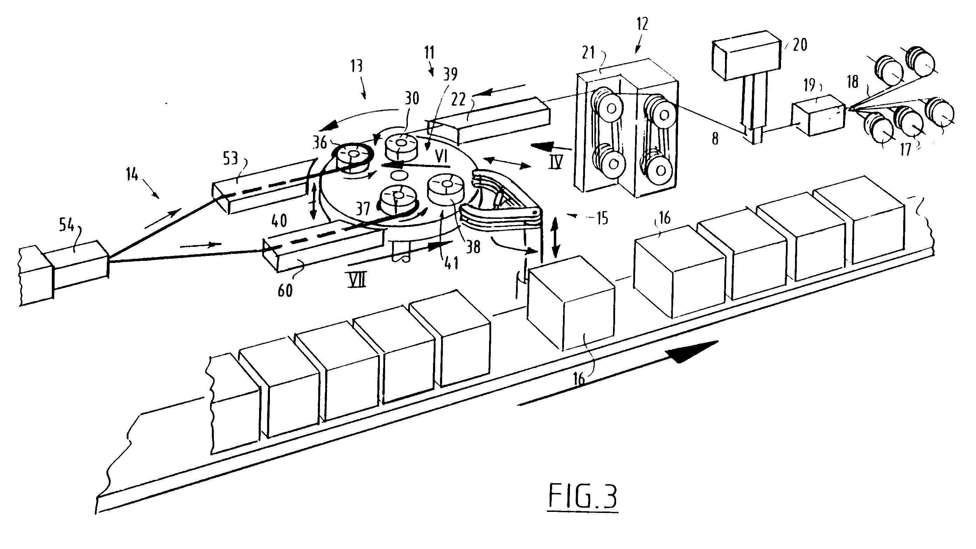

Fig. 3 shows an apparatus or installation 11, according to the invention, for the manufacture of the bead core assembly 5 shown in Fig. 2. The installation comprises a bead wire supply unit 12, a turntable 13, a supply unit 14 for the filler material and an unloading unit 15 for placing completed bead core assemblies 5 into cassettes 16.

The supply unit 12 comprises reels 17 of steel wire 18, a unit 19 for the parallel orientation of the steel wires which are then coated with rubber 10 by passage through a rubber extruder 20. On leaving the extruder the wires 18 are formed into a filamentary, rubber-coated tape or layer 8. As the layer 8 leaves the extruder 20, it passes into an accumulator 21 where the layer is held for subsequent supply at variable transport speed, e.g. discontinuously, to the turntable 13 by means of a transporter 22.

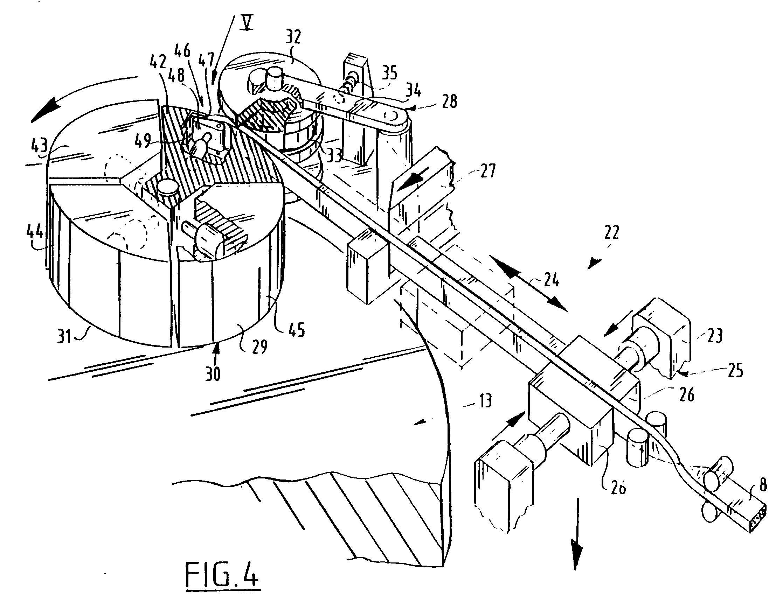

The transporter 22 is shown in more detail in Fig. 4 and comprises, as indicated by double arrow 24, a reciprocating gripping unit 23 for gripping the layer 8 between blocks 26. The gripping layer 8 is supplied, speeded up, to the turntable 13 and after the supply of a measured length, is cut to the desired length by a knife 27. With the aid of pressing means 28, the layer 8 is pushed against the surface 29 of a former 30. The pressing means 28 comprises a pressure roller 32, which, initiated by means of a lever 34 urged by a spring 35, is pressed against the former 30. The pressure roller 32 has an annular groove or recess 33 whose depth is slightly less than the thickness of each layer 8 of the formed annular bead core 3.

The turntable 13 carries four independently rotatable formers 30, 36 - 38 which are equally spaced radially from the axis of rotation of the turntable and equally spaced circumferentially relative to each other. In Fig. 3 the former 30 is positioned in a bead winding first station 39, the formers 36 and 37 are positioned in a filler material applying second station 40 and the former 38 is positioned in a discharge or unloading third station 41.

As shown in Fig. 4, the former 30 comprises a segmented formwheel 31 having a fixed formwheel segment 42, and three radially reciprocating movable formwheel segments 43-45. In Fig. 4 worms are shown positioned beneath the formwheel segments 43-45 and engage with teeth on the bottom surfaces of the segments 43-45 to move the segments radially inwards or outwards. The fixed formwheel segment 42 is adapted to carry grip attachments 46 for the seizing or gripping of the leading end 47 of the layer 8. The grip attachments 46 comprises an angle shaped striker 48 situated in the former 29, and a locking device 49, for trapping the layer 8 against the striker 48.

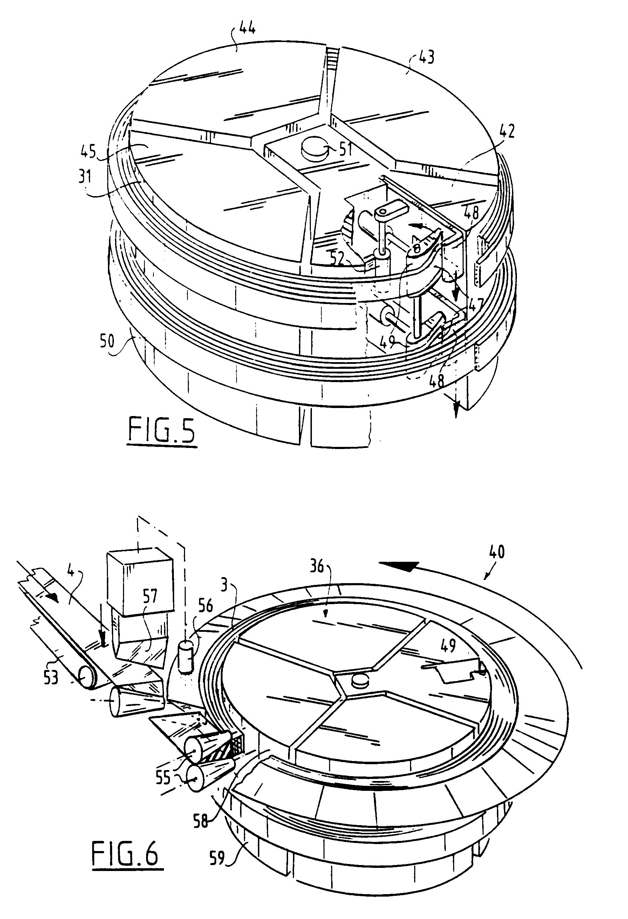

As shown in more detail in Fig. 5 the former 30 comprises two coupled former rings 31 and 50, defining axially spaced apart annular winding surfaces, which are mounted on a common rotatable former shaft 51. It should be understood that in Fig. 3 and 4 only the winding of the bead on former ring 31 has been shown but that in fact winding takes place on the upper former ring 31 and the lower former ring 50 simultaneously. Of course it is also possible to provide more than two former rings to enable more than two bead core assemblies to be simultaneously formed.

Fig. 6 shows in more detail the former 36 in the second station 40. In this station, elastomeric filler material 4, produced to the desired, e.g. triangular, cross-section by an extruder 54, is fed by means of a conveyor 53 and a pair of frusto-conical rollers 55, which press the material 4 against the wound bead core 3. With the aid of a detector 56 the required length of the filler ring-forming material is defined and is cut with a knife 57. The length of filler material is directed and placed on the upper former ring 58 of the former 36. The length is such that the filler ring produced is seamlessly fitted in the circumferential direction on top of the previously wound rubber-coated steel wire. In the same way a length of filler material is supplied by the conveyor 60 and placed on the lower former ring 59 of the former.

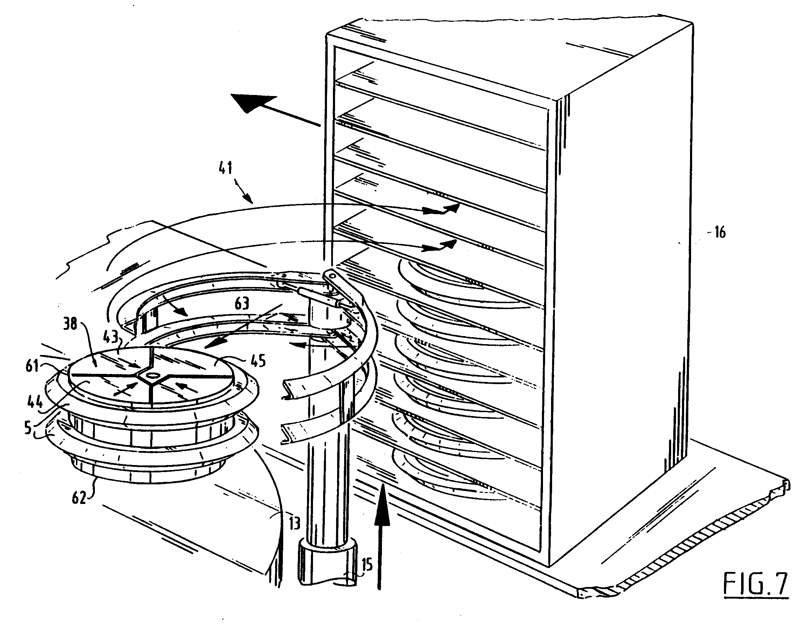

Fig. 7 shows the unloading third station 41 with a discharge unit 15. The former 38 is fitted with two former rings 61 and 62 from which two bead assemblies 5 are removed by unloading devices 63. After the unloading device 63 have seized the two bead assemblies 5 the former segments are moved radially inwards, as indicated by the arrows, and the unloading devices 63 place the two bead assemblies in the cassette 16.

From the description it will be clear that by indexing the turntable 13 through 90° indexing turns, the four formers are successively moved between the various stations and in doing so bead assemblies 5 are produced at a high production rate and are unloaded into the cassette 16. Since the second station comprises two sub-stations, the four formers are each located in a different station or sub-station after each indexing rotation or turn of the turntable 13. Reference number 100 indicates schematically a control arrangement for controlling the sequencing of the various operations involved in producing a tire bead core assembly on the apparatus.

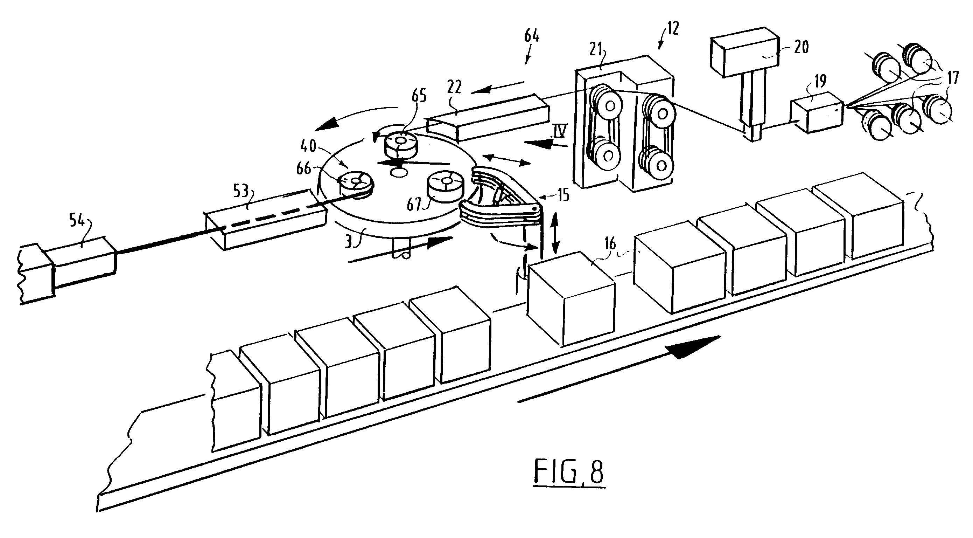

Fig. 8 shows alternative apparatus 64, according to the invention, with a turntable 3 mounting only three formers 65, 66 and 67, each equipped with only one former ring. The difference over apparatus 11 is that in the second station 40 only one former is present, carrying one bead 3 for the application thereto of a ring 4 of filler material. The production speed is lower, but identical assemblies 5 are formed.

Although the apparatus described includes a turntable 3 which moves a former from one station into the next station, it is of course possible to move the formers into "dwell" locations between each station. For example the turntable 3 in Fig. 8 could in principle mount six formers angularly spaced 60° apart and with the stations spaced 120° apart. Two indexing rotations would then be required to move a former from one to the next succeeding station. Although less preferred, because it does not produce bead assemblies at such high rates, it will be realised that only one former need be mounted on the turntable. In this case the various operations could not be performed simultaneously at each station as is possible when three or more formers are mounted on the turntable.

Although the formers have been described herein as being mounted on a rotatable turntable, it will be appreciated that the formers could instead be mounted on a different type of movable mounting means which is movable to move the formers successively into different stations. For example the formers could be mounted on linearly movable mounting means with the various stations arranged in a line. However this is less preferred to the arrangement of a turntable which on indexing rotation will automatically return a former to the first station after leaving the third station. Furthermore, it would be possible to form a bead wire core assembly on a single former with the various stations arranged around it. However this arrangement is a less preferred design since production speed is slow as only one bead core assembly is produced at a time.

## Claims

1. Apparatus (11) for manufacturing an assembly (5) of an annular bead wire core (3) and a surrounding ring of filler material (4), the apparatus (11) comprising a rotatable former (30) having an annular winding surface and a bead wire gripping device (46); rotating means for rotating the former (30); a first unit (12) for feeding the leading end of a length of bead wire material (8) to the gripping device (46) so that, when said leading end is gripped by the gripping device and the rotating means are subsequently operated to rotate the former (30), the bead wire material is wound on to the annular winding surface to form the annular bead wire core (3); a second unit (14) for feeding a length of filler material (4) to the former (30) so that it can be applied around the annular bead wire core to form the tyre bead core assembly; and a third unit (15) for unloading the assembled bead core assembly from the former; characterised in that the second unit includes pressing means (55) positioned to press the filler material directly onto the annular bead wire core (3) as the former (30) is rotated to form a single turn of filler material overlying the annular bead wire core (3).

2. Apparatus according to claim 1, characterised in that the apparatus (11) further comprises movable mounting means (13) rotatably mounting said former (30), a bead wire winding first station (39), a filler material applying second station (40), a bead assembly unloading third station (41), each of said stations being arranged at spaced apart fixed locations, and indexing means for moving the mounting means sequentially into said first, second and third stations, the first unit (12) being positioned to feed the bead wire material to the former (30) when the latter is positioned at the first station (39), the second unit (14) being positioned to feed the filler material (4) to the former (30) when the latter is positioned at the second station (40) and the third unit (15) being positioned to unload the bead core assembly when the former is positioned at the third station (41).

3. Apparatus according to claim 2, characterised in that more than one rotatable former (30, 36, 37, 38) is mounted on the mounting means (13), the formers (30, 36 - 38) being positioned so that in any indexing position at least two formers are positioned in at least two of said stations.

4. Apparatus according to claim 2 or 3, characterised in that the mounting means (13) comprises a turntable rotatable about a first axis, the first, second and third stations (39, 40, 41) being arranged around the turntable and the or each former being radially spaced from said first axis.

5. An apparatus according to claim 3, characterised in that the or each former includes at least two axially spaced apart annular winding surfaces (31, 50) on which the bead wire material is to be wound and a rotatable former shaft for rotating the winding surfaces together.

6. An apparatus according to claim 5, characterised in that the two annular winding surfaces (31, 50) form parts of a common former member, e.g. of cylindrical form.

7. An apparatus according to claim 5, characterised in that the second station (40) comprises two sub stations in each of which said filler material (4) is applied to one or both of said annular winding surfaces.

8. Apparatus according to claim 3, characterised in that the or each gripping unit comprises a striker (48) and a movable locking member (49) for clamping the leading end of the bead wire material between the striker (48) and the locking member (49).

9. An apparatus according to claim 8, characterised in that the striker (48) is movable in a direction parallel to the rotational axis of the former into and out of a gripping position.

10. An apparatus according to claim 1, characterised by means for arranging the bead wire material fed to the first unit in the form of a layer comprising a number of parallel bead wires.

11. An apparatus according to claim 10, characterised in that the number of bead wires in said layer is from 2 to 7.

12. An apparatus according to claim 1, characterised in that the former (30) comprises a number of angularly spaced apart former segments (43 - 45) one of which is at least substantially fixed and mounts said gripping device.

13. A method of manufacturing an assembly of an annular bead wire core (3) and a surrounding ring of filler material (4), comprising supplying a length of bead wire material (8) to a rotatable former (30), rotating the former (30) to wind the length of bead wire material fed thereto onto an annular winding surface (31) of the former, supplying a length of filler material (4) to the former, rotating the former (30) about a former axis to wind the filler material about said former axis, positioning the filler material (4) in a ring around the wound bead wire material to form a bead core assembly, and unloading the formed bead core assembly from the former; characterised in that the filler material (4) is pressed directly onto the wound bead wire material as the filler material is wound about said former axis in a single turn to form said bead core assembly.

14. A method according to claim 13, characterised in that the bead wire material (4) is wound on to the annular winding surface of the former at a first station (39), the length of filler material is wound onto the bead wire material at a second station (40) and the formed bead core assembly is removed from the former at a third station (41), the former being moved sequentially from the first station (39) to the second station (40) and from the second station to the third station (41).

15. A method according to claim 14, characterised in that the former (30) is mounted on a rotatable turntable (13) at a distance from the axis of rotation of the latter and the turntable (13) is rotatably indexed to move the former (30) from station to station.

16. A method according to claim 15, characterised in that at least three formers (30, 36 - 38) are mounted on the turntable (13), whereby, in each indexed position, one former (30) is positioned at the first station (39), one (38) is positioned at the third station (41) and at least one former (36, 37) is positioned at the second station (40).

## Patentansprüche

1. Vorrichtung (11) zum Herstellen einer Einheit (5) aus einem ringförmigen Wulstdrahtkern (3) und einem umgebenden Ring aus Füllmaterial (4), wobei die Vorrichtung (11) einen drehbaren Formgeber (30) mit einer ringförmigen Wickeloberfläche und eine Wulstdrahtgreifeinrichtung (46), Drehmittel zum Drehen des Formgebers (30), eine erste Einheit (12), die das vordere Ende einer Länge aus Wulstdrahtmaterial (8) der Greifeinrichtung (46) so zuführt, daß das Wulstdrahtmaterial zur Bildung des ringförmigen Wulstdrahtkernes (3) auf die ringförmige Wickeloberfläche gewickelt wird, wenn das vordere Ende von der Greifeinrichtung aufgenommen wird und die Drehmittel anschließend zwecks Drehung des Formgebers (30) betätigt werden, eine zweite Einheit (14), die eine Länge aus Füllmaterial (4) dem Formgeber (30) so zuführt, daß dieses Material um den ringförmigen Wulstdrahtkern herum zur Bildung der Reifenwulstkerneinheit aufgebracht werden kann, sowie eine dritte Einheit (15) umfaßt, die dazu dient, die gebildete Wulstkerneinheit aus dem Formgeber zu entnehmen, dadurch gekennzeichnet, daß die zweite Einheit Andrückmittel (55) enthält, die so positioniert sind, daß das Füllmaterial während der Drehung des Formgebers (30) direkt auf den ringförmigen Wulstdrahtkern (3) gedrückt wird, um eine den ringförmigen Wulstdrahtkern (3) überdeckende einzelne Lage aus Füllmaterial zu bilden.

2. Vorrichtung nach Anspruch 1, dadurch gekennzeichnet, daß die Vorrichtung (11) weiterhin bewegbare Montagemittel (13) zur drehbaren Montage des Formgebers (30), eine erste Wulstdrahtwickelstation (39), eine zweite Füllmaterialaufbringungsstation (40), eine dritte Wulsteinheitentnabmestation (41), wobei jede dieser Stationen an festgelegten Stellen mit Abstand zueinander angeordnet ist, sowie Schaltbewegungsmittel, um die Montagemittel aufeinanderfolgend in die erste, zweite und dritte Station zu bewegen, umfaßt, wobei die erste Einheit (12) so positioniert ist, daß das Wulstdrahtmaterial dem Formgeber (30) zugeführt wird, wenn der Letztgenannte sich an der ersten Station (39) befindet, die zweite Einheit (14) so positioniert ist, daß das Füllmaterial (4) dem Formgeber (30) zugeführt wird, wenn der Letztgenannte sich an der zweiten Station (40) befindet, und die dritte Einheit (15) so positioniert ist, daß die Wulstkerneinheit entnommen wird, wenn der Formgeber sich an der dritten Station (41) befindet.

3. Vorrichtung nach Anspruch 2, dadurch gekennzeichnet, daß mehr als ein drehbarer Formgeber (30, 36, 37, 38) an dem Montagemittel (13) montiert ist, wobei die Formgeber (30, 36 - 38) so positioniert sind, daß in jeder Schaltbewegungsposition mindestens zwei Formgeber in mindestens zwei der Stationen positioniert sind.

4. Vorrichtung nach Anspruch 2 oder 3, dadurch gekennzeichnet, daß das Montagemittel (13) einen Drehtisch umfaßt, der um eine erste Achse drehbar ist, wobei die erste, zweite und dritte Station (39, 40, 41) um den Drehtisch herum vorgesehen sind und der oder jeder Formgeber radial mit Abstand zu der ersten Achse angeordnet ist.

5. Vorrichtung nach Anspruch 3, dadurch gekennzeichnet, daß der oder jeder Formgeber mindestens zwei axial mit Abstand angeordnete ringförmige Wickeloberflächen (31, 50), auf die das Wulstdrahtmaterial gewickelt werden soll, und eine drehbare Formgeberwelle enthält, mit der die Wickeloberflächen gemeinsam gedreht werden können.

6. Vorrichtung nach Anspruch 5, dadurch gekennzeichnet, daß die beiden ringförmigen Wickeloberflächen (31, 50) Teile eines gemeinsamen Formgeberelementes, beispielsweise in zylindrischer Form, bilden.

7. Vorrichtung nach Anspruch 5, dadurch gekennzeichnet, daß die zweite Station (40) zwei Unterstationen umfaßt, in denen jeweils das Füllmaterial (4) auf eine oder beide der ringförmigen Wickeloberflächen aufgebracht wird.

8. Vorrichtung nach Anspruch 3, dadurch gekennzeichnet, daß die oder jede Greifeinheit einen Anschlag (48) und ein bewegbares Verriegelungselement (49) umfaßt, um das vordere Ende des Wulstdrahtmaterials zwischen dem Anschlag (48) und dem Verriegelungselement (49) festzuhalten.

9. Vorrichtung nach Anspruch 8, dadurch gekennzeichnet, daß der Anschlag (48) in einer parallel zu der Drehachse des Formgebers verlaufenden Richtung sich in die. Greifposition hinein- und aus dieser Position herausbewegen kann.

10. Vorrichtung nach Anspruch 1, gekennzeichnet durch Mittel, mit denen das der ersten Einheit zugeführte Wulstdrahtmaterial in Form einer Schicht, die aus einer Anzahl paralleler Wickeldrähte besteht, angeordnet werden kann.

11. Vorrichtung nach Anspruch 10, dadurch gekennzeichnet, daß die Anzahl der Wulstdrähte in der Schicht 2 bis 7 beträgt.

12. Vorrichtung nach Anspruch 1, dadurch gekennzeichnet, daß der Formgeber (30) eine Anzahl winklig mit Abstand zueinander angeordneter Formgebersegmente (43 - 45) umfaßt, von denen ein Segment zumindest im wesentlichen fixiert ist und zur Montage der Greifeinrichtung dient.

13. Verfahren zum Herstellen einer Einheit aus einem ringförmigen Wulstdrahtkern (3) und einem umgebenden Ring aus Füllmaterial (4), wobei das Verfahren die Zuführung einer Länge aus Wulstdrahtmaterial (8) zu einem drehbaren Formgeber (30), das Drehen des Formgebers (30), um die Länge aus zugeführtem Wulstdrahtmaterial auf eine ringförmige Wickeloberfläche (31) des Formgebers zu wickeln, die Zuführung einer Länge aus Füllmaterial (4) zum Formgeber, das Drehen des Formgebers (30) um eine Formgeberachse, um das Füllmaterial um die Formgeberachse zu wickeln, das Positionieren des Füllmaterials (4) in einem das gewickelte Wulstdrahtmaterial umgebenden Ring, um eine Wulstkerneinheit zu bilden, und das Entnehmen der gebildeten Wulstkerneinheit aus dem Formgeber umfaßt, dadurch gekennzeichnet, daß das Füllmaterial direkt auf das gewickelte Wulstdrahtmaterial gedrückt wird, während das Füllmaterial in einer einzelnen Lage um die Formgeberachse gewickelt wird, um die Wulstkerneinheit zu bilden.

14. Verfahren nach Anspruch 13, dadurch gekennzeichnet, daß das Wulstdrahtmaterial (4) an einer ersten Station (39) auf die ringförmige Wickeloberfläche des Formgebers gewickelt wird, die Länge aus Füllmaterial an einer zweiten Station (40) auf das Wulstdrahtmaterial gewickelt wird und die gebildete Wulstkerneinheit an einer dritten Station (41) aus dem Formgeber entnommen wird, wobei der Formgeber aufeinanderfolgend von der ersten Station (39) zu der zweiten Station (40) und von der zweiten Station zu der dritten Station (41) bewegt wird.

15. Verfahren nach Anspruch 14, dadurch gekennzeichnet, daß der Formgeber (30) auf einem drehbaren Drehtisch (13) mit Abstand zu der Drehachse des Letztgenannten montiert und der Drehtisch (13) drehbar weitergeschaltet wird, um den Formgeber (30) von Station zu Station zu bewegen.

16. Verfahren nach Anspruch 15, dadurch gekennzeichnet, daß mindestens drei Formgeber (30, 36 - 38) auf dem Drehtisch (13) montiert werden, so daß in jeder Schaltposition ein Formgeber (30) an der ersten Station (39), ein Formgeber (38) an der dritten Station (41) und mindestens ein Formgeber (36, 37) an der zweiten Station (40) positioniert wird.

## Revendications

1. Appareil (11) pour fabriquer un ensemble (5) d'une tringle de talon annulaire (3) et d'un anneau de matière de remplissage (4) qui l'entoure, l'appareil (11) comprenant un enrouleur rotatif (30) ayant une surface d'enroulement annulaire et un dispositif de serrage de tringle de talon (46); des moyens de rotation pour mettre en rotation l'enrouleur (30); une première unité (12) pour amener l'extrémité de tête d'une longueur de matière de tringle de talon (8) au dispositif de serrage (46) de telle sorte que, lorsque ladite extrémité de tête est serrée par le dispositif de serrage et que les moyens de rotation sont subséquemment actionnés pour mettre en rotation l'enrouleur (30), la matière de tringle de talon est enroulée sur la surface d'enroulement annulaire pour former la tringle de talon annulaire (3); une deuxième unité (14) pour amener une longueur de matière de remplissage (4) à l'enrouleur (30) de telle sorte qu'elle puisse être appliquée autour de la tringle de talon annulaire pour former l'ensemble de la tringle de talon d'un pneu; et une troisième unité (15) pour retirer l'ensemble de tringle de talon assemblé de l'enrouleur; caractérisé en ce que la deuxième unité comprend des moyens de pression (55) positionnés pour presser la matière de remplissage directement sur la tringle de talon annulaire (3) tandis que l'enrouleur (30) est mis en rotation pour former un seul tour de la matière de remplissage recouvrant la tringle de talon annulaire (3).

2. Appareil suivant la revendication 1, caractérisé en ce que l'appareil (11) comprend en outre des moyens de montage mobiles (13) portant de façon rotative ledit enrouleur (30), une première station d'enroulement de tringle de talon (39), une deuxième station d'application de la matière de remplissage (40), une troisième station de déchargement de l'ensemble de tringle de talon (41), chacune desdites stations étant disposée à des endroits fixes espacés les uns des autres, et des moyens de transfert pour déplacer les moyens de montage séquentiellement dans lesdites première, deuxième et troisième stations, la première unité (12) étant positionnée pour amener la matière de tringle de talon à l'enrouleur (30) lorsque ce dernier est positionné à la première station (39), la deuxième unité (14) étant positionnée pour amener la matière de remplissage (4) à l'enrouleur (30) lorsque ce dernier est positionné à la deuxième station (40) et la troisième unité (15) étant positionnée pour retirer l'ensemble de tringle de talon lorsque l'enrouleur est positionné à la troisième station (41).

3. Appareil suivant la revendication 2, caractérisé en ce que plus d'un enrouleur rotatif (30, 36, 37, 38) sont montés sur les moyens de montage (13), les enrouleurs (30, 36 à 38) étant positionnés de telle sorte que dans n'importe quelle position de transfert, au moins deux enrouleurs soient positionnés dans au moins deux desdites stations.

4. Appareil suivant la revendication 2 ou 3, caractérisé en ce que les moyens de montage (13) comprennent une plaque tournante pouvant tourner autour d'une premier axe, les première, deuxième et troisième stations (39, 40, 41) étant disposées autour de la plaque tournante et le ou chaque enrouleur étant radialement espacé dudit premier axe.

5. Un appareil suivant la revendication 3, caractérisé en ce que le ou chaque enrouleur comprend au moins deux surfaces d'enroulement annulaires espacées axialement l'une de l'autre (31, 50) sur lesquelles la matière de tringle de talon doit être enroulée et un arbre d'enrouleur rotatif pour mettre en rotation les surfaces d'enroulement ensemble.

6. Un appareil suivant la revendication 5, caractérisé en ce que les deux surfaces d'enroulement annulaires (31, 50) font partie d'un élément d'enrouleur commun, par exemple de forme cylindrique.

7. Un appareil suivant la revendication 5, caractérisé en ce que la deuxième station (40) comprend deux sous-stations dans chacune desquelles ladite matière de remplissage (4) est appliquée à une ou aux deux desdites surfaces d'enroulement annulaires.

8. Appareil suivant la revendication 3, caractérisé en ce que la ou chaque unité de serrage comprend un percuteur (48) et un élément de blocage mobile (49) pour coincer l'extrémité de tête de la matière de tringle de talon entre le percuteur (48) et l'élément de blocage (49).

9. Un appareil suivant la revendication 8, caractérisé en ce que le percuteur (48) est mobile dans une direction parallèle à l'axe de rotation de l'enrouleur dans et hors d'une position de serrage.

10. Un appareil suivant la revendication 1, caractérisé par des moyens pour disposer la matière de tringle de talon amenée à la première unité sous la forme d'une couche comprenant un certain nombre de tringles de talon parallèles.

11. Un appareil suivant la revendication 10, caractérisé en ce que le nombre de tringles de talon dans ladite couche va de 2 à 7.

12. Un appareil suivant la revendication 1, caractérisé en ce que l'enrouleur (30) comprend un certain nombre de segments d'enrouleur espacés angulairement les uns des autres (43 - 45) dont un est au moins substantiellement fixe et porte ledit dispositif de serrage.

13. Un procédé de fabrication d'un ensemble d'une tringle de talon annulaire (3) et d'un anneau de matière de remplissage (4) qui l'entoure, comprenant la fourniture d'une longueur de matière de tringle de talon (8) à un enrouleur rotatif (30), la mise en rotation de l'enrouleur (30) pour enrouler la longueur de matière de tringle de talon amenée à celui-ci sur une surface d'enroulement annulaire (31) de l'enrouleur, la fourniture d'une longueur de matière de remplissage (4) à l'enrouleur, la mise en rotation de l'enrouleur (30) autour d'un axe d'enrouleur pour enrouler la matière de remplissage autour dudit axe d'enrouleur, le positionnement de la matière de remplissage (4) en un anneau autour de la matière de tringle de talon enroulée pour former un ensemble de tringle de talon, et le retrait de l'ensemble de tringle de talon formé de l'enrouleur; caractérisé en ce que la matière de remplissage est pressée directement sur la matière de tringle de talon enroulée lorsque la matière de remplissage est enroulée autour dudit axe d'enrouleur en un seul tour pour former ledit ensemble de tringle de talon.

14. Un procédé suivant la revendication 13, caractérisé en ce que la matière de tringle de talon (4) est enroulée sur la surface d'enroulement annulaire de l'enrouleur à une première station (39), la longueur de matière de remplissage est enroulée sur la matière de tringle de talon à une deuxième station (40) et l'ensemble de tringle de talon formé est retiré de l'enrouleur à une troisième station (41), l'enrouleur étant déplacé séquentiellement à partir de la première station (39) vers la deuxième station (40) et à partir de la deuxième station vers la troisième station (41).

15. Un procédé suivant la revendication 14, caractérisé en ce que l'enrouleur (30) est monté sur une plaque tournante pouvant tourner (13) à une distance de l'axe de rotation de cette dernière et la plaque tournante (13) est transférée de façon rotative pour déplacer l'enrouleur (30) de station à station.

16. Un procédé suivant la revendication 15, caractérisé en ce qu'au moins trois enrouleurs (30, 36 - 38) sont montés sur la plaque tournante (13), et de ce fait, dans chaque position de transfert, un premier enrouleur (30) est positionné à la première station (39), un autre (38) est positionné à la troisième station (41) et au moins un enrouleur (36, 37) est positionné à la deuxième station (40).
